# EUROPEAN PATENT APPLICATION

(11) **EP 3 236 421 A1**
(43) Date of publication of application: **25.10.2017**
(21) Application number: 15869895.1
(22) Date of filing: 11.12.2015
(51) Int. Cl.: G06T 15/04, G06T 17/05, G09B 29/00

(54) **TEXTURE GENERATION SYSTEM**

(30) Priority: 17.12.2014 JP 2014254808
(71) Applicant: Geo Technical Laboratory Co., Ltd., Fukuoka-shi, Fukuoka 812-0013 (JP)
(72) Inventor: TOMITAKA, Tsubasa, Fukuoka-shi Fukuoka 812-0013 (JP); UCHINOUMI, Masashi, Fukuoka-shi Fukuoka 812-0013 (JP); FUKUSHIMA, Yuki, Fukuoka-shi Fukuoka 812-0013 (JP)
(74) Representative: Eder Schieschke & Partner mbB
(86) International application number: PCT/JP2015/084756
(87) International publication number: WO 2016/098690

(57) **Abstract**

[Problem] To randomly array unit textures on a feature surface to reduce the processing load and generate highly realistic texture.

[Solution] For a feature such as a building, the unit textures of an "ON image" representing a lighted state and an "OFF image" representing an unlighted state are provided by designating one window or a plurality of windows as a unit. In addition, a two-valued matrix in which 0 or 1 is stored for each pixel is provided separately from the textures. When attaching texture on the surface of a building is determined, and pixels corresponding to this array are obtained from an arbitrary part of the matrix. In addition, according to a value of 1 or 0 stored in the matrix, the ON image or the OFF image is selected and attached to the building surface. Accordingly, for the outer appearance of a building, a highly realistic texture can be generated in a state where lighted and unlighted and areas randomly co-exist while the processing load is reduced.

## Description

### [Technical Field]

The present invention relates to a texture generation system which generates a texture representing an appearance of a feature.

### [Background Art]

As an electronic map used in a navigation device, a computer screen or the like, there exists a three-dimensional map representing features such as a building in a three-dimensional manner. In the three-dimensional map, a three-dimensional shape of a feature is represented by a three-dimensional model, and reality is improved by pasting a texture representing an appearance of the feature on a surface thereof. The texture may be generated for a part of the feature such as a window instead of an entire appearance of the feature. Patent Literature 1 discloses a technique in which textures are prepared by the unit of an element such as a floor for a multi-floor building, and a texture of an entire wall surface is made by repeatedly applying this in accordance with the number of floors.

In recent years, a demand for improvement of reality of the three-dimensional map has become increasingly higher, and representation of not only a daytime view but also a night view by the three-dimensional map is in demand. In the case of a night view, there are some building windows with lights on and other building windows with lights off. In order to improve the reality of the night view, a texture with lights on and off mixed needs to be prepared.

### [Citation List]

### [Patent Literature]

Patent Literature 1: Japanese Patent Laid-Open No. 2004-362184

### [Summary of Invention]

### [Problems to be Solved by Invention]

In order to improve the reality of the night view, on and off of lights are preferably arranged randomly. As one method, two types of textures representing lighted and unlighted states of the building windows, respectively, are prepared and by selecting and arranging the two types of textures of lighted/unlighted states for each window in accordance with a random number, a generally random lighted state can be represented. However, since a large number of buildings are included in the three-dimensional map, a processing load for representing the night view becomes huge with such a method.

As a method for reducing such processing load, there can be a method in which a plurality of types of textures representing patterns of lighted/unlighted states is prepared by the unit of group in which a plurality of windows are arrayed and used separately in accordance with the random number. A specific example will be shown.

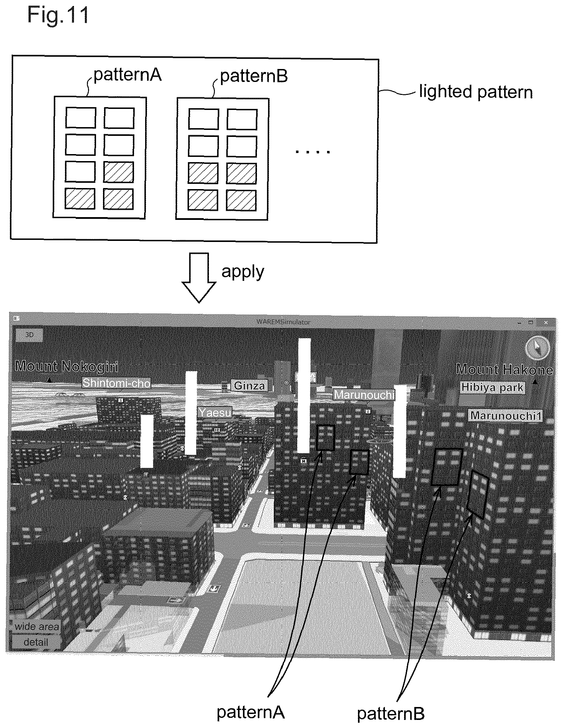

Fig. 11 is an explanatory view exemplifying the three-dimensional map of the night view using two types of lighted patterns. In this example, as illustrated on an upper side of the view, 8 windows of 2 in width x 4 in height are made one group. A hatched window in the figure represents an unlighted state. A pattern A is a texture in a state where a lowest stage and a window on the right side on a second stage from a bottom are unlighted, while the other windows are lighted. A pattern B is a texture in a state where windows on lower two stages are unlighted, while the other windows are lighted. On a lower side of the view, an example representing a night view by arranging these lighted patterns by a random number is illustrated. However, by looking at this example carefully, the pattern A and the pattern B are found in a framed portion of a building, whereby the reality is considerably impaired.

That is, use of a random number for each window which is a minimum unit in order to improve the reality causes the processing load to become huge, while to the contrary, if the textures are used separately by the unit of group in which a plurality of windows are arrayed in order to reduce the processing load, the reality is impaired. The similar problem is not limited to the case targeted to the windows or not limited to the night view. In trees, too, a plurality of types of unit textures which can be applied to tree portions such as textures representing branches or leaves are prepared and the entire texture can be generated by selecting unit textures at random. The same applies to mountains, fields, clouds and the like. The aforementioned problem can occur similarly in various features to which the plurality of types of textures can be applied while being selected.

The present invention was made in view of such circumstances and has an object to provide a method of generating a texture which realizes both suppression on the processing load and improvement of the reality by avoiding regularity.

### [Means for Solving the Problem]

The present invention is a texture generation system which generates a texture representing an appearance of a feature in a three-dimensional map, including:
a map database storing a three-dimensional model representing a three-dimensional shape of the feature and a plurality of types of unit textures which can be selectively applied to the feature;
a matrix storage unit which stores a matrix of a predetermined size, each pixel of the matrix storing a control value for controlling selection of the unit texture; and
a texture generating unit which generates a texture of a polygon constituting the three-dimensional model by arraying and pasting a plurality of the unit textures, in which
the texture generating unit can be configured to:
   associate each position of the array in the polygon with a pixel of the matrix;
   select any of the plurality of types of the unit textures on the basis of the control value of the matrix corresponding to each of the positions; and
   array and paste the selected unit texture at each of the positions.

According to the present invention, as the texture representing the appearance of the three-dimensional model, a texture in which the unit textures are arranged at random can be generated. Moreover, since the control value stored in the matrix is used for selection of the unit texture, there is no need to execute processing such as generation of a random number for each portion of the three-dimensional model, whereby the processing load can be suppressed. As a result, regularity is no longer recognized easily in the arrangement of the unit textures, and more natural appearances can be represented for the features.

In the three-dimensional map, since there are a large number of the three-dimensional models to which the textures should be applied, an effect of reducing the processing load realized by use of the matrix is extremely high.

A size of the matrix can be set arbitrarily. By increasing the size in advance, association between each position on the polygon with the pixel of the matrix becomes diversified, and an arrangement pattern of the selected unit textures can be also diversified.

For the association between each position on the polygon and the pixel of the matrix, various methods can be employed. For example, a reference point may be determined on the matrix and a region according to the array on the polygon may be associated. This is a method in which, when the unit pixels are arranged in an array of 2 in width x 3 in height on the polygon, 2 x 3 pixels around the reference point are made to correspond to each of the positions. There is no need to allocate continuous regions on the matrix to each position on the polygon. For example, such a method may be employed that each position on the polygon is subjected to coordinate conversion to a pixel on the matrix with a predetermined function.

The matrix does not have to be a single type but a plurality of types may be used separately. However, in view of reducing the processing of reading out the matrix from the memory, a single matrix with a large size is preferably prepared than preparation of a large number of matrixes.

The "generation" of the texture in the present invention includes both a mode of generating a single texture image in which unit textures are arrayed and a mode of directly pasting the unit textures on a three-dimensional model while selecting them.

The three-dimensional models to which the present invention can be applied include buildings, trees, mountains, fields, clouds and the like, for example as exemplified in Fig. 11. In the case of buildings, textures representing lighted/unlighted states of windows can be prepared as unit textures. Two types of textures, that is, the lighted and the unlighted may be prepared or three or more types of textures representing a plurality of lighted patterns of windows may be prepared. In the case of trees, textures representing branches and leaves in various states may be prepared as unit textures. Then, by arranging these unit textures around trunks of the trees while selecting them, diversified trees can be represented. The unit textures may be arranged by overlapping with each other. Similarly, for the mountains and fields, too, it is only necessary to prepare unit textures representing trees and crops in various states. In the case of clouds, textures representing various colors of portions of one cloud such as white and gray can be prepared. By selecting and arranging these textures for each portion of the cloud, diversified clouds with various colors mixed can be easily represented. The unit textures may be arranged by overlapping with each other. The present invention can be applied to various three-dimensional models other than the above.

In the present invention, the control value stored in the matrix can take various modes.

For example, the matrix may store the control value corresponding to each type of the unit textures on a one-to-one basis.

For example, when two types of the unit textures are prepared, the control values also take two types in the mode. The values do not necessarily have to be continuous like 0 and 1 but may take arbitrary values like 10 and 100. When three types of the unit textures are prepared, there only needs to be three types of the control values.

By making the unit texture and the control value correspond to each other on the one-to-one basis as above, the unit texture can be uniquely determined rapidly in accordance with the control value of the matrix and thus, the processing load can be more reduced.

Moreover, in the present invention,
the matrix stores control values in a numeral value range wider than the number of types of the unit textures, and
the texture generating unit may make the selection by quantizing the control value to the number of the unit texture types through comparison between the control value and a predetermined threshold value.

For example, it is a mode in which any value within a range of 0 to 255 is stored as a control value. When two types of the unit textures are prepared, any of the unit textures only needs to be selected in accordance with a magnitude relation between the threshold value and the control value. When three types of the unit textures are prepared, first and second threshold values with different values (first threshold value < second threshold value) are prepared, and the three types of the unit textures only need to be selected in each of different cases: (1) the case of the control value < first threshold value; (2) the case of the first threshold value ≤ control value < second threshold value; and (3) the case of the second threshold value ≤ control value. In the aforementioned mode, the range of the control values and the threshold values can be set arbitrarily, and it has a merit that a ratio of use of the unit texture can be flexibly set in accordance with these settings.

When the threshold value is to be used,
the texture generating unit may change the threshold value in accordance with a predetermined condition to make the selection .

By configuring as above, the ratio of use of the unit texture can be changed in accordance with the condition, and it has a merit that diversified textures can be generated. For example, when two types of textures representing the lighted/unlighted states of the windows are used for a building, diversified night views such as a state after late evening when most of the windows are lighted and a state in the midnight when most of the windows are unlighted can be represented by changing the threshold value in accordance with time of the day.

Regardless of how to select the unit texture,
the texture generating unit may change association between each position of the array and the pixel of the matrix for each generation of the texture.

By configuring as above, a different pixel of the matrix, that is, a different control value can be used each time the texture is generated, and an array of the unit textures can be changed in a more diversified manner. The association may be changed for each different feature for which the texture is to be generated or may be changed for each different polygon for which the texture is to be generated in the same feature.

A method of changing the association can also take various modes. For example, in a mode in which the pixels around the reference point of the matrix are to be associated, the position of the reference point only needs to be changed. A position of the reference point may be changed regularly or may be changed on the basis of a random number or the like. Alternatively, when each position of the array is to be associated with the pixel by a function, the function used for the association may be changed.

Moreover, in the present invention, modes of the unit textures are also diversified.

The unit texture is stored as a single integral texture in which a plurality of types of the unit textures are arranged so as not to overlap with each other, and
the texture generating unit may paste a portion corresponding to the selected unit texture in the integral texture in accordance with the selection.

If the plurality of types of the unit textures is prepared as individual image data, processing of reading out the respective unit textures may be needed in accordance with a selection result. On the other hand, in the aforementioned mode, since the integral texture in which the plurality of types of the unit textures is arranged is prepared, there is no more need to repeat the reading processing in accordance with the selection result of the unit texture only by reading the integral texture from the memory, whereby the processing load can be reduced.

In the integral texture, the unit textures do not necessarily have to be arranged without a gap but there may be a gap between the unit textures.

The number of the integral textures is not limited to one. When extremely many unit textures are used, the unit textures may be divided into a plurality of groups so that the integral texture is prepared for each group.

In the present invention, it is not necessary to include all the aforementioned various features but a part thereof may be omitted or combined in configuration as appropriate.

The present invention may be configured not only as a texture generation system but also as a three-dimensional map display system involving such texture generation. Moreover, it may be also configured as a texture generating method for generating a texture or a display method of a three-dimensional map by a computer. Furthermore, the present invention may be also configured as a computer program for causing a computer to execute generation of a texture or display of a three-dimensional map. Moreover, it may be configured as a computer readable recording medium which records such computer program.

### [Brief Description of the Drawings]

[Fig. 1] Fig. 1 is an explanatory view illustrating configuration of a three-dimensional map display system.
[Fig. 2] Fig. 2 is an explanatory view illustrating a structure of a map database.
[Fig. 3] Fig. 3 is a flowchart of three-dimensional map display processing.
[Fig. 4] Fig. 4 is a flowchart of night view texture generation processing.
[Fig. 5] Fig. 5 is an explanatory view illustrating a selecting method of a unit texture.
[Fig. 6] Fig. 6 is an explanatory view illustrating a display example (1) of a three-dimensional map.
[Fig. 7] Fig. 7 is an explanatory view illustrating a display example (2) of the three-dimensional map.
[Fig. 8] Fig. 8 is an explanatory view illustrating a selecting method of a unit texture in a variation (1).
[Fig. 9] Fig. 9 is an explanatory view illustrating the selecting method of the unit texture in a variation (2).
[Fig. 10] Fig. 10 is an explanatory view illustrating an arranging method of the unit texture as a variation.
[Fig. 11] Fig. 11 is an explanatory view exemplifying the three-dimensional map of a night view using two types of lighted patterns.

### [Description of Embodiment]

### [Embodiment 1]

An embodiment configured as a three-dimensional map display system for displaying a three-dimensional map on a display of a computer relating to the present invention will be described. A texture generation system of the present invention is carried out in a form incorporated in the three-dimensional map display system. The three-dimensional map display system can be also configured by using various devices such as mobile terminals including a smart phone, a mobile phone, and a tablet terminal and a navigation device other than the computer.

Moreover, in this embodiment, the system operating on a standalone basis is exemplified, but it may be configured as a system which stores a map database 20 and the like illustrated in the figure in a server and connects the server and the navigation device via a network.

### A. System configuration:

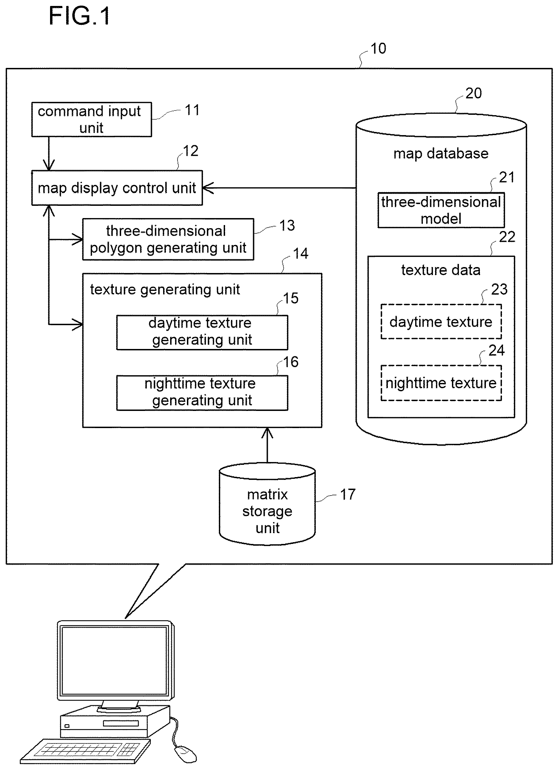

Fig. 1 is an explanatory view illustrating configuration of the three-dimensional map display system. The three-dimensional display system 10 as an embodiment is realized in a software manner by installing a computer program for realizing each of illustrated functions in a computer including a CPU, a RAM, and a ROM. At least a part of the functions may be configured in a hardware manner. Moreover, in order to execute graphics of the three-dimensional map, a GPU (Graphics Processing Unit) may be mounted on the computer besides a CPU.

A function of each functional block in the figure will be described.

The map database 20 stores data required for displaying the three-dimensional map. In the example in the figure, a three-dimensional model 21 and texture data 22 are illustrated. Other than them, a character database storing characters to be displayed on the map may be included, for example. Moreover, network data for route search, that is, a database representing roads by links and nodes may be included.

The three-dimensional model 21 stores polygon data and the like representing three-dimensional shapes of features such as buildings.

The texture data 22 stores image data representing appearances of the features as textures to be pasted on polygons. A daytime texture 23 is a texture utilized when the three-dimensional map for a daytime view is to be displayed. A night view texture 24 is a texture utilized when the three-dimensional map for a night view is to be displayed. Images representing shapes of windows are prepared as the daytime texture 23 for buildings such as a multi-floor building, and images representing lighted states, images representing unlighted states of the windows and the like are prepared as the night view textures 24.

In the texture data 22, a texture to be pasted on the entire polygon and a unit texture to be arrayed and pasted on the polygon are prepared in a mixed manner. Structures of the texture data and the like will be described later.

A command input unit 11 inputs a command by a user through an operation unit such as a keyboard and a mouse or via a network. The command includes a display range, a viewpoint, a view line direction, a display mode and the like when the three-dimensional map is displayed. In this embodiment, since the three-dimensional map can be displayed as a daytime view or a night view, a command for switching them may be included.

A map display control unit 12 controls display of the three-dimensional map. Moreover, it also reads required data from the map database.

A three-dimensional polygon generating unit 13 arranges the three-dimensional model 21 of each feature in a virtual three-dimensional space in order to display the three-dimensional map.

A texture generating unit 14 pastes a texture on a surface of the three-dimensional polygon. A daytime texture generating unit 15 pastes a texture representing a daytime view by using the daytime texture 23. A nighttime texture generating unit 16 pastes a texture representing a night view by using the nighttime texture 24. In this embodiment, when a night view is to be represented, the texture in a state where building windows are lighted at random is generated by arranging two types of unit textures representing the lighted/unlighted states of the windows while selecting them at random. For this processing, a matrix storing a control value used for selection of the unit texture is used. A matrix storage unit 17 stores this matrix.

In this Description, the "generation" of a texture includes both a mode in which a plurality of unit textures are arranged so as to generate a single texture and a mode of sequentially pasting a plurality of the unit textures on the polygon. In this embodiment, the texture generating unit 14 generates a texture of the polygon in the latter mode, that is, in the mode in which the unit textures are sequentially pasted on the polygon.

In the functional blocks described above, in this embodiment, the map database 20, the texture generating unit 14, and the matrix storage unit 17 configures the texture generation system in the present invention.

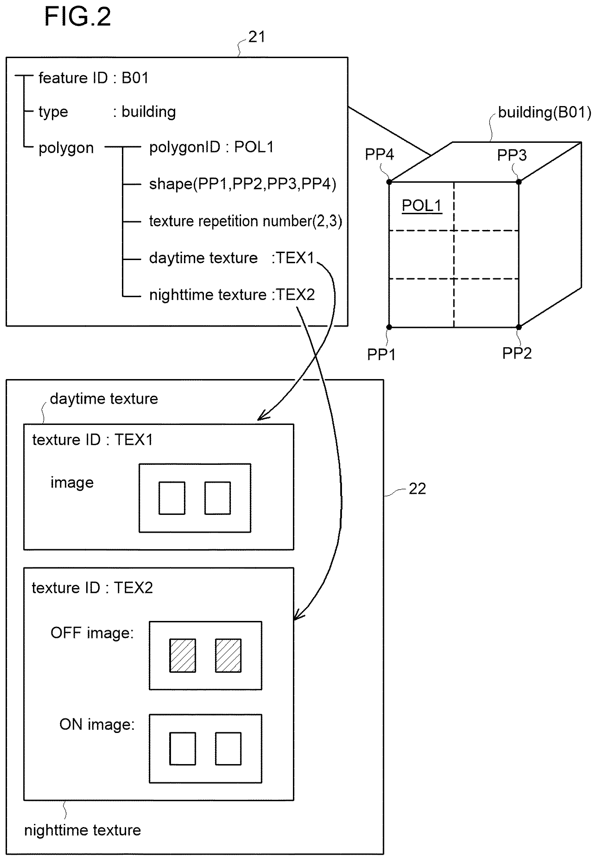

Fig. 2 is an explanatory view illustrating a structure of the map database.

On an upper side of the figure, a data example of the three-dimensional model 21 is illustrated. In the three-dimensional model 21, data such as a feature ID, a type, and the polygon is stored.

The feature ID is identification information of a feature and in an example of a building illustrated on a right side, "B01" is given as the feature ID.

The type is a kind of the feature and in the example illustrated on the right side, it is a "building". Various types of information such as roads, railways, mountains, and fields can be used as the type other than that. Trees and clouds may also be included in the type.

The polygon stores data to be illustrated.

The polygon ID is identification information of each polygon configuring the three-dimensional model, and in the example illustrated on the right side, POL1 is given to the polygon on a front surface of the building.

The shape is data specifying the shape of the polygon, and in this embodiment, a coordinate value of an apex is stored. In the example illustrated on the right side, three-dimensional coordinate values are stored for each of apexes PP1, PP2, PP3, and PP4 of the polygon. For the coordinate value, absolute coordinates based on an origin of the entire three-dimensional map may be used or relative coordinates using a reference point set for each feature as an origin may be used. In the latter case, the absolute coordinate values of the reference point are separately stored in the three-dimensional model 21.

A texture repetition number is information regulating an array of the textures to be pasted on the polygon. In the example of the figure on the right, the surface of the building is divided into sections of width 2 x height 3, and the window textures are repeatedly pasted here. Therefore, the texture repetition number stores data of (2, 3). When one texture is arranged on the entire polygon without repetition, the texture repetition number is (1, 1).

For the daytime texture and the nighttime texture, identification information of the texture to be used in the polygon is stored, respectively.

The three-dimensional model 21 may include attribute data representing an attribute of the feature. For example, data representing a name, a floor number and the like may be used as the attribute data for the building.

On a lower side of the figure, an example of the texture data 22 is illustrated. The texture data 22 stores the daytime texture and the nighttime texture. Each texture is composed of the texture ID as identification information and image data.

In the example of the figure, for the daytime texture, "TEX1" is given as the texture ID, and an image representing the shape of a window is prepared. In the three-dimensional model 21 described above, since "TEX1" is designated as the daytime texture, when a daytime view is to be represented for the building (B01) illustrated on the right side of the figure, the image represented by TEX1 of the texture data 22 is repeatedly arrayed in 2 images in width x 3 images in height.

In the example in the figure, for the nighttime texture, "TEX2" is given as the texture ID, and two types of images, that is, an OFF image in an unlighted window state and an ON image in a lighted window state are prepared. In the three-dimensional model 21 described above, since "TEX2" is designated as the nighttime texture, when a night view is to be represented for the building (B01) illustrated on the right side of the figure, an ON image and an OFF image represented by TEX2 of the texture data 22 are repeatedly arrayed in 2 images in width x 3 images in height while being selected.

For the nighttime texture, individual texture IDs such as "TEX2OFF" and "TEX2ON" may be given to the OFF image and the ON image. In such a case, information associating the both as nighttime textures may be prepared in the texture data 22, or the two texture IDs of "TEX2OFF" and "TEX2ON" may be stored as the nighttime textures of the three-dimensional model 21.

For the nighttime texture, a plurality of types of images does not necessarily have to be prepared as the OFF image or the ON image for each of the three-dimensional model, but a single image may be prepared.

### B. Three-dimensional map display processing:

Subsequently, processing contents when a three-dimensional map is displayed in the three-dimensional map display system 10 of the embodiment will be described.

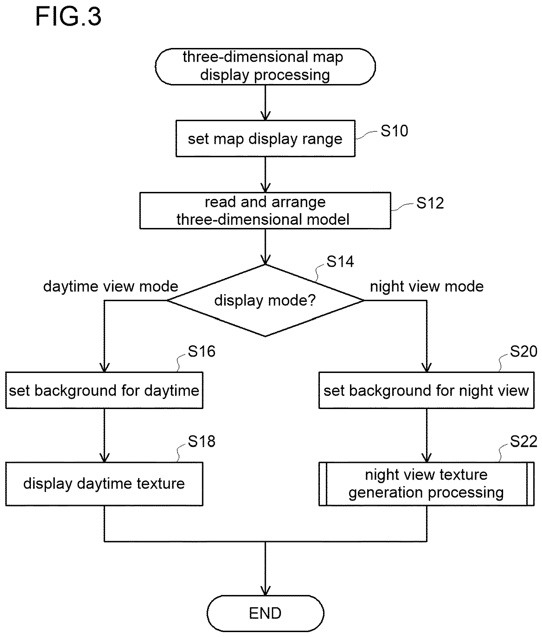

Fig. 3 is a flowchart of the three-dimensional map display processing. When the processing is started, the three-dimensional map display system 10 sets a map display range (Step S10) . The map display range may be set by an instruction from a user, for example. Alternatively, when the three-dimensional map display system is incorporated in a route guidance system, it may be set in accordance with a result of a route search or a current position. The three-dimensional map display system 10 reads the three-dimensional model required for the map display from the map database 20 and arranges it in a virtual three-dimensional space in accordance with a display range of the map (Step S12).

Subsequently, display of a background and the texture is made in accordance with the display mode of the map.

In the case of the daytime view mode (Step S14), the three-dimensional map display system 10 sets a background, sky, a distant view and the like for a daytime (Step S16). Then, the daytime texture is displayed for the feature (Step S18). The daytime texture designated by the three-dimensional model 21 is read from the texture data 22 and is pasted on each polygon.

In the case of the night view mode (Step S14), a background for a night view such as dark sky is set (Step S20), and night view texture generation processing is executed for the feature (Step S22). This processing is processing of reading the nighttime texture designated by the three-dimensional model 21 from the texture data 22 and of selecting the ON image and the OFF image at random and pasting them in accordance with a portion of the polygon. Contents of the processing will be described later.

The three-dimensional map display system 10 displays the three-dimensional map by executing the processing above for each feature.

### C. Night view texture generation processing:

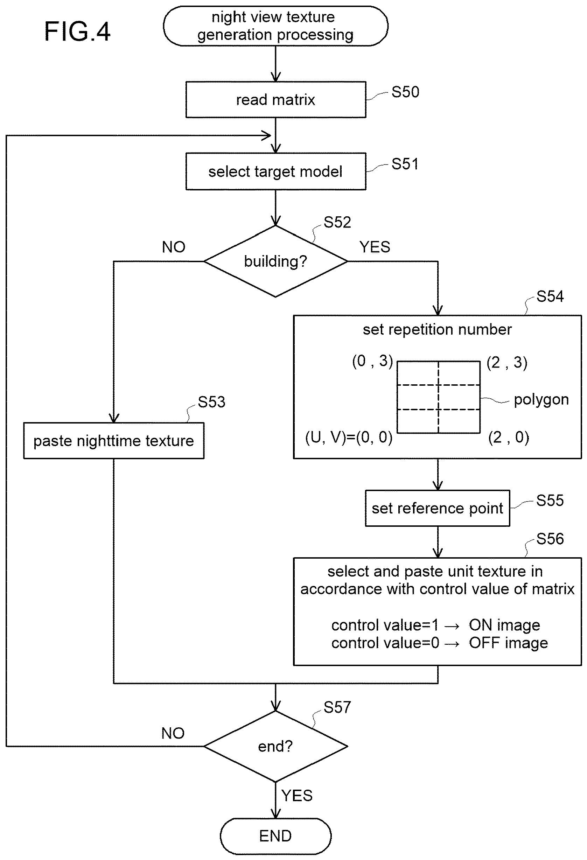

Fig. 4 is a flowchart of the night view texture generation processing. This is the processing corresponding to Step S22 of the three-dimensional map display processing (Fig. 3).

When the processing is started, the three-dimensional map display system 10 reads the matrix from the matrix storage unit 17 (Step S50) . Each pixel of the matrix stores control values for selecting the ON image or the OFF image. In this embodiment, since there are two types of images, that is, the ON image and the OFF image for the unit textures to be selected, it is assumed that binary values of 0 and 1 are stored in the matrix.

Subsequently, the three-dimensional map display system 10 selects the feature to be processed as a target model (Step S51). The target model only needs to be selected from those to which the texture generation processing has not been applied.

When the target model is not a building (Step S52), the three-dimensional map display system 10 determines that the ON image and the OFF image do not have to be used separately and pastes the nighttime texture designated by the three-dimensional model 21 (Step S53). The nighttime texture may be pasted on the entire polygon without repetition or may be pasted in repeated arrangement as illustrated in Fig. 2.

If the target model is a building (Step S52), the three-dimensional map display system 10 sets the number of repetitions in accordance with the texture repetition number of the three-dimensional model 21 (Step S54) . In the figure, a setting example in which repetition of 2 in width x 3 in height is made is illustrated. In this embodiment, it is assumed that coordinate values according to the repetition number is given as two-dimensional coordinate system (U, V) for pasting the texture. As illustrated, UV coordinate values such as the lower left of the polygon set to the origin (0, 0), the lower right to (2, 0), the upper left to (0, 3), and the upper right to (2, 3) are given. The designated texture image is pasted so as to be contained in a rectangular region represented by apexes of (0, 0) - (1, 1) in the UV coordinate values, and if a value exceeding 1 is set as the UV coordinate value, pasting is performed repeatedly in accordance with the value. Therefore, when each coordinate value in the figure is set, the array of 2 in width x 3 in height can be specified. The repetition number can be similarly specified by the UV coordinate values also in different arrays.

Subsequently, the three-dimensional map display system 10 sets a reference point determining a use region of the matrix (Step S55). The reference point may be a fixed point arbitrarily set such as lower left of the matrix or may be selected in compliance with a certain rule or by a random number every time this processing is executed. In this embodiment, a random number is generated, and an x-coordinate and a y-coordinate of the reference point are set.

After the reference point is set, the three-dimensional map display system 10 selects and pastes the unit texture in accordance with the control value of the matrix (Step S56) . In this embodiment, since binary values of 0 and 1 are stored in each pixel of the matrix, the ON image is selected in the case of the value 1 and the OFF image is selected in the case of the value 0.

Selection of the unit texture using the matrix at Steps S55 and S56 will be described later in more detail on the basis of a specific example.

The three-dimensional map display system 10 pastes the nighttime texture on the target model by the processing described above. This processing is repeatedly executed for all the target models until completion (Step S57).

In this embodiment, the processing is sorted on the basis of whether the target model is a building or not (see Step S52) . This is because the two types of the unit textures, that is, the ON image and the OFF image are used separately only for the building. When a plurality of types of the unit textures is selected and used also for the features other than the building, the processing similar to that of the building (Steps S54 to S56) only needs to be executed for such features.

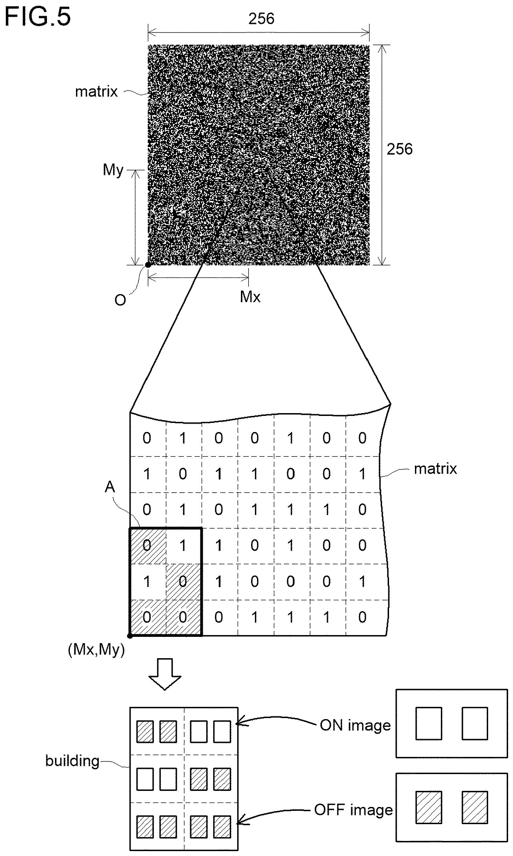

Fig. 5 is an explanatory view illustrating a selecting method of the unit texture. On an upper side of the figure, an example of the matrix is illustrated. In this embodiment, a size is set to 256 x 256 pixels, but the size of the matrix can be set arbitrarily. Binary values of 0 and 1 are stored in each pixel of the matrix. In the example in the figure, the pixel storing the value 0 is indicated in black, while the pixel storing 1 is indicated in white. In the example of the figure, the values 0 and 1 are substantially equal in number and set so that they are distributed evenly, but a ratio and distribution of the values 0 and 1 can be also set arbitrarily. For such matrix, a method in which an operator designates a value of each pixel, a method of determining a value of each pixel by a function or a random number and the like can be used.

In the figure, the reference point set at Step S55 of the night view texture generation processing (Fig. 4) is also illustrated. A pixel at a position of Mx in a lateral direction and of My in a vertical direction is the reference point with the lower left of the matrix as an origin O. A coordinate of the reference point (Mx, My) can be determined by a random number, a function and the like.

A middle stage of the figure is an enlarged view of a part of the matrix. A rectangular region is illustrate with the reference point (Mx, My) on the lower left side. Each cell in the figure indicates a pixel of the matrix and stores the control value of 0 or 1.

At Step S56 in the night view texture generation processing (Fig. 4), the three-dimensional map display system 10 associates each pixel in a region A corresponding to the repetition number of the unit texture with each portion of the polygon with the reference point (Mx, My) of the matrix as the origin. As illustrated in Fig. 4, when the unit textures are arranged in the repetition number of 2 in width x 3 in height, the region A of the matrix made of 2 pixels in width x 3 pixels in height is associated with each portion.

On a lower stage of the figure, a selection result of the ON image and the OFF image is illustrated. Since a lower left pixel in the region A stores 0 as the control value, the OFF image is selected (see Step S56 in Fig. 4). The same applies to the lower right pixel. For the middle stage, since the control value on the left side is 1 and the control value on the right side is 0, the ON image is selected for the left side and the OFF image is selected for the right side. For the upper stage, since the control value on the left side is 0 and the control value on the right side is 1, the OFF image is selected for the left side, and the ON image is selected for the right side. As described above, by selecting the ON image or the OFF image and pasting it on the corresponding portion of the polygon in accordance with the control value of the pixel, the texture of the entire building as illustrated in the lower stage of the figure can be generated.

Since distribution of the control values in the matrix is different depending on the region, if the reference point is different, the region used for selection of the unit texture changes, and the obtained result also becomes different. Moreover, even if the fixed reference point is used at all times, when the repetition number is different, the size of the region applied for the selection changes, and an impression of the obtained result also becomes different.

The processing described in Fig. 5 has particularly high usability when GPU is used. In general, the GPU is designed so that relatively simple processing can be executed at a high speed and has a characteristic that a processing speed becomes relatively slow in condition branch. In the processing in Fig. 5, since the control value of each pixel of the matrix is obtained, and the ON image and the OFF image can be uniquely determined in accordance with the result, speed up can be achieved. For example, by using the obtained control value of 0 or 1 as an argument for designating the ON image or the OFF image as it is, both can be used separately without through the condition branch.

In the example in Fig. 5, each portion of the polygon is associated with the region A set around the reference point, but association between the both may be made on the basis of a function. A region having the same shape as that of the polygon does not necessarily have to be allocated in the method in which any one of pixels of the matrix can be allocated to each portion of the polygon.

### D. Map display example:

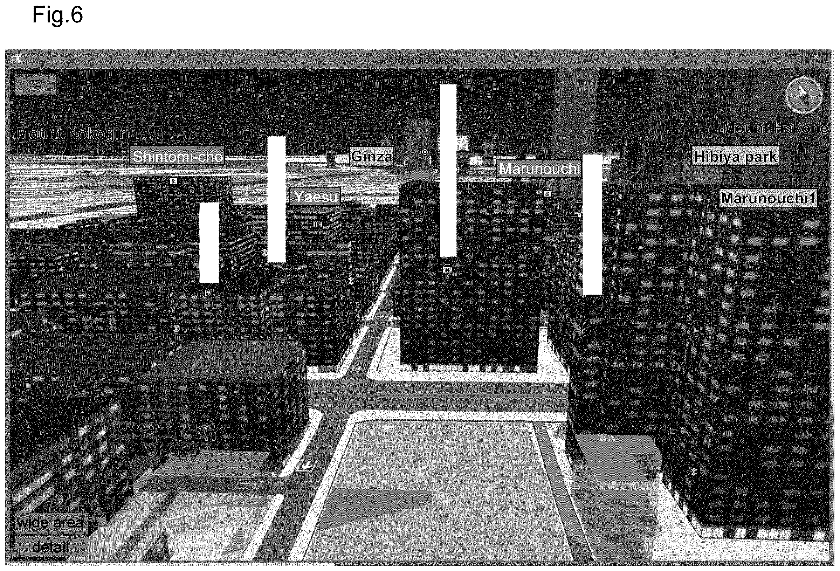

Fig. 6 is an explanatory view illustrating a display example (1) of the three-dimensional map. As a prior art, an example displaying the three-dimensional map of a night view under the same condition as that illustrated in Fig. 11 is illustrated. In Fig. 11, portions in which the lighted/unlighted states such as the pattern A and the pattern B are regularly arranged can be visually recognized, but in the display example (1) in Fig. 6, such regularity cannot be found. As described above, according to this embodiment, more natural state can be displayed as the lighted/unlighted states of the building in a night view.

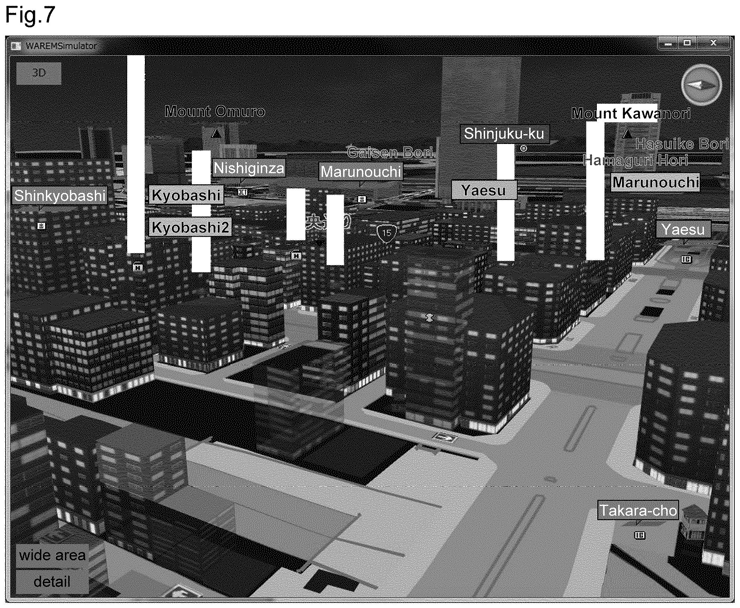

Fig. 7 is an explanatory view illustrating a display example (2) of the three-dimensional map. An example overlooked from a viewpoint upper than that in the display example in Fig. 6 is illustrated. By heightening the viewpoint position, much more windows of the buildings can be visually recognized, but even in such a state, the lighted/unlighted states can be displayed for the building windows without a sense of discomfort.

### E. Effect and variation:

According to the embodiment described above, by using the matrix, the night view display without a sense of discomfort can be realized by using the ON image and the OFF image separately while suppressing the processing load.

In the embodiment, the two windows are used as the unit textures, but the shape or the like of the unit texture can be set arbitrarily. One window may be made a unit texture or much more windows may be made a unit texture. However, if a group in which many windows are two-dimensionally arranged as in the pattern A or the pattern B illustrated in Fig. 11 is made the unit texture, a pattern of each unit texture can be visually recognized easily. Therefore, it is preferable that the unit texture is brought close to a minimum element unit, that is, in the example of a building, to a single window as much as possible, and even if a plurality of windows are included, they are preferably arranged one-dimensionally.

This embodiment is a technique for selecting and arranging a plurality of unit textures for the three-dimensional model and is not a technique limited to representation of a night view of buildings. By applying this embodiment to various features, diversified features can be displayed while the processing load is suppressed, whereby reality of the three-dimensional map can be further improved. For example, by selecting and applying a plurality of unit textures with different states of branches and leaves to trees, diversified trees can be represented. By selecting and applying unit textures in diversified colors such as white and gray to clouds, clouds with various shapes and colors can be represented. In the embodiment, the example in which the unit textures are arranged without overlapping with each other is illustrated, but the unit textures may be overlapped with each other and pasted depending on the feature to which the present technique is applied.

Regarding this embodiment, further various variations can be considered for the processing. They will be described below.

### (1) Variation (1) of selecting method of unit texture:

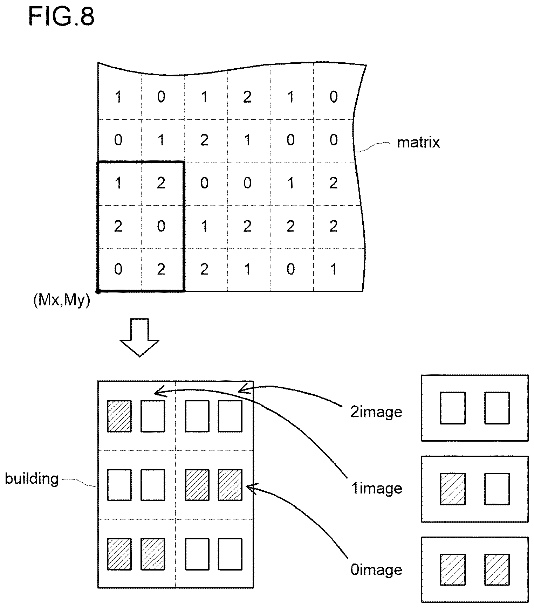

Fig. 8 is an explanatory view illustrating a selecting method of the unit texture in a variation (1) . In the embodiment, the two types of the unit textures of the ON image and the OFF image are used, but in the variation (1), three types of unit textures illustrated on lower right are used. A 0 image is a unit texture in which two windows are unlighted. A 1 image is a unit texture in which the left side is unlighted and the right side is lighted. A 2 image is a unit texture in which the two windows are lighted.

In the matrix, three values of 0, 1, and 2 are stored as illustrated in an upper stage. As a result, the three types of the unit textures can be used separately and arranged in accordance with each pixel of the matrix similarly to the embodiment. That is, it is only necessary that the 0 image is arranged for a pixel storing a control value of 0, the 1 image for the pixel storing the control value of 1, and the 2 image for the pixel storing the control value of 2. As a result, as illustrated on lower left, more diversified lighted states than that in the embodiment can be represented.

A case in which four or more of the unit textures are prepared can be also processed similarly to the variation (1) .

### (2) Variation (2) of selecting method of unit texture:

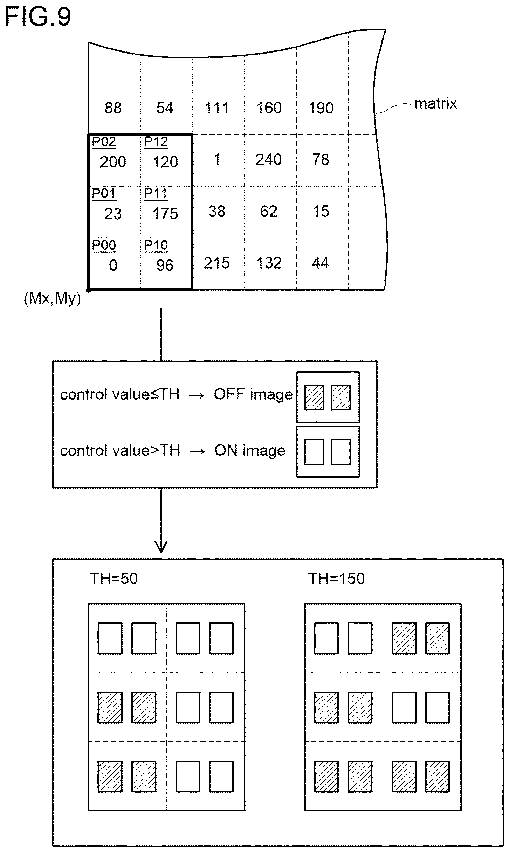

Fig. 9 is an explanatory view illustrating a selecting method of a unit texture in a variation (2) . In this example, two types of the unit textures of the ON image and the OFF Image are used. However, the matrix stores not the control values in binary values of 0 and 1 but control values within a range of 0 to 255, that is, within a numerical value range wider than the number of types of the unit textures . A range of the control values can be set arbitrarily.

In the variation (2), selection of the ON image and the OFF image is made on the basis of a magnitude relationship between the control value stored in each pixel and a threshold value TH. That is, in a case of the control value ≤ TH, the OFF image is used, while in a case of the control value > TH, the ON image is used.

A result of the case of the threshold value TH= 50 and the case of 150 are illustrated on a lower stage.

In the case of the threshold value TH = 50, the control value of a pixel P00 on lower left is 0, and the control value ≤ TH and thus, the OFF image is selected. The control value of a pixel P10 on lower right is 96, and the control value > TH and thus, the ON image is selected. Similarly, the OFF image is selected for a pixel P01, and the ON image is selected for pixels P11, P02, and P12. As a result, in the case of the threshold value TH = 50, a texture with many windows in the lighted state is obtained as illustrated on lower left.

Subsequently, in the case of the threshold value TH= 150, when the unit texture is selected similarly, the OFF image is selected for the pixels P00, P10, P01, and P12, and the ON image is selected for the pixels P11 and P02. As a result, in the case of the threshold value TH = 100, a texture with many windows in the unlighted state is obtained as illustrated on lower right.

As described above, according to the variation (2), by changing the threshold value TH, an obtained texture can be changed even in the same building. The threshold value TH may be designated by a user or may be changed in accordance with a condition such as time when the three-dimensional map is displayed. By using the threshold value TH = 50 for time of a day such as late evening and the threshold value TH = 150 for midnight, for example, a night view according to period of time can be represented.

In the variation (2), too, three or more types of the unit textures can be used. When three types of the unit textures (0 image, 1 image, and 2 image) are used as in the variation (1) (Fig. 8), for example, two threshold values TH1 and TH2 (TH1 < TH2) only need to be used. The images can be used separately such as the 0 image in the case of the control value ≤ TH1, the 1 image in the case of the TH1 < control value ≤ TH2, and the 2 image in the case of the TH2 < the control value. In this case, by changing at least one of the threshold values TH1 and TH2, a ratio of the three types of the unit textures can be changed.

### (3) Variation of arranging method of unit texture:

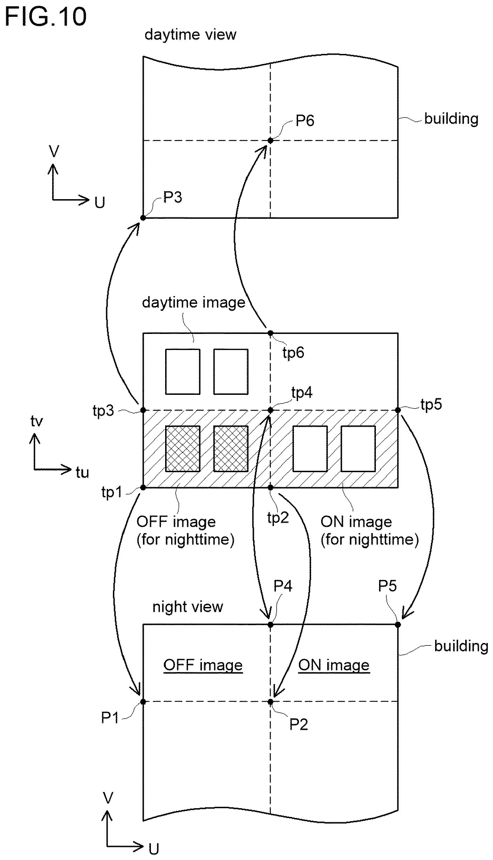

Fig. 10 is an explanatory view illustrating an arranging method of a unit texture as a variation. In this example, the unit texture is not prepared as individual image data but prepared as integral texture arrayed in one. An example of the integral texture is illustrated on a middle stage. In this example, a daytime image is arranged on an upper stage of a single image, the OFF image for nighttime on the left side of a lower stage, and the ON image for nighttime on the right side of the lower stage. The three unit textures are arranged without a gap, but a gap may be provided. A position of the image of the integral texture is indicated by a coordinate system (tu, tv) defined for the integral texture.

A method of utilizing the texture for displaying a daytime view is illustrated on an upper side of the figure. A UV coordinate system is defined for the texture of a building. Since a daytime image is pasted on the building, coordinate conversion is executed so that a point tp3 of the daytime image is made to correspond to a lower left point P3 which is a unit of arrangement and a point tp6 of the daytime image is made to correspond to an upper right point P6. If the point P3 is (0, 0) in the UV coordinate system and the point P6 is (1, 1), it is only necessary to apply parallel movement and enlargement/reduction to the coordinate system of (tu, tv) so that the coordinate of the point tp3 is (0, 0) and the coordinate of the point tp6 is (1, 1).

A method of utilizing the texture for displaying a night view is illustrated on a lower side of the figure. Since the OFF image and the ON image are selected and pasted on the building, the coordinate conversion is executed so that apexes of the OFF image and the ON image correspond for each of regions which become units of the arrangement. A case in which the OFF image is pasted on the left side on the uppermost stage of the polygon and the ON image on the right side as illustrated is considered. The coordinate conversion only needs to be executed for the left side so that points tp1 and tp4 of the OFF image correspond to the points P1 and P4, respectively. At this time, the coordinate conversion needs to be made so that the points P1 and P4 of the polygon to be pasted also become (0, 0) and (1, 1) in the UV coordinate system, respectively. That is because the texture corresponding to the range of (0, 0), (1, 1) is repeatedly applied when the UV coordinate exceeds 1. Similarly, for the right side, it is only necessary to execute coordinate conversion so that points P2 and P5 are subjected to coordinate conversion so as to become (0, 0), (1, 1) in the UV coordinate system and then, the points tp2 and tp5 on the ON image correspond to these two points.

By shifting portions to be used in the integral texture in accordance with the selection result of the unit texture to be pasted as above, the image similar to that in the embodiment can be obtained. When the unit texture is stored as an individual image, the unit texture needs to be read each time in accordance with the selection result, while according to the method of the variation, once the integral texture is read, there is no need to read a new texture during the processing of generating a texture, and quickening of the processing can be further promoted.

In this variation, too, three or more unit textures can be used for nighttime.

The various variations of this embodiment have been illustrated. The present invention is not limited to the embodiment and the variations described herein, but is capable of configuring further various variations.

### [Industrial Applicability]

The present invention can be utilized for generating a texture representing an appearance of a feature.

### [Reference Numerals]

- 10: three-dimensional map display system
- 11: command input unit
- 12: map display control unit
- 13: three-dimensional polygon generating unit
- 14: texture generating unit
- 15: daytime texture generating unit
- 16: nighttime texture generating unit
- 17: matrix storage unit
- 20: map database
- 21: three-dimensional model
- 22: texture data
- 23: daytime texture
- 24: night view texture

## Claims

1. A texture generation system which generates a texture representing an appearance of a feature in a three-dimensional map, comprising:
a map database storing a three-dimensional model representing a three-dimensional shape of the feature and a plurality of types of unit textures which can be selectively applied to the feature;
a matrix storage unit which stores a matrix of a predetermined size, each pixel of the matrix storing a control value for controlling selection of the unit texture; and
a texture generating unit which generates a texture of a polygon constituting the three-dimensional model by arraying and pasting a plurality of the unit textures, wherein
the texture generating unit performs:
associating each position of the array in the polygon with a pixel of the matrix;
selecting any of the plurality of types of the unit textures on the basis of the control value of the matrix corresponding to each of the positions; and
arraying and pasting the selected unit texture at each of the positions.

2. The texture generation system according to claim 1, wherein the matrix stores the control value corresponding to each type of the unit textures on a one-to-one basis.

3. The texture generation system according to claim 1, wherein the matrix stores control values in a numeral value range wider than the number of types of the unit textures, and
the texture generating unit makes the selection by quantizing the control value to the number of the unit texture types through comparison between the control value and a predetermined threshold value.

4. The texture generation system according to claim 3, wherein the texture generating unit makes the selection by changing the threshold value in accordance with a predetermined condition.

5. The texture generation system according to any one of claims 1 to 4, wherein the texture generating unit changes association between each position of the array and the pixel of the matrix for each generation of the texture.

6. The texture generation system according to any one of claims 1 to 5, wherein
the unit texture is stored as a single integral texture in which the plurality of types of the unit textures are arranged so as not to overlap with each other, and
the texture generating unit pastes a portion corresponding to the selected unit texture in the integral texture in accordance with the selection.

7. A method of generating a texture representing an appearance of a feature in a three-dimensional map, wherein
the method comprises following steps as steps executed by a computer:
a step of referring to a map database storing a three-dimensional model representing a three-dimensional shape of the feature and a plurality of types of unit textures which can be selectively applied to the feature;
a step of referring to a matrix of a predetermined size, each pixel of the matrix storing a control value for controlling selection of the unit texture; and
a texture generating step for generating a texture of a polygon constituting the three-dimensional model by arraying and pasting the plurality of the unit textures, wherein
the texture generating step comprises:
a step of associating each position of the array in the polygon with a pixel of the matrix;
a step of selecting any of the plurality of types of the unit textures on the basis of the control value of the matrix corresponding to each of the positions; and
a step of arraying and pasting the selected unit texture at each of the positions.

8. A computer program for causing a computer to execute generation of a texture representing an appearance of a feature in a three-dimensional map, wherein
the computer program causes the computer to realize:
a function of referring to a map database storing the three-dimensional model representing a three-dimensional shape of the feature and a plurality of types of unit textures which can be selectively applied to the feature;
a function of referring to a matrix of a predetermined size, each pixel of the matrix storing a control value for controlling selection of the unit texture; and
a texture generating function for generating a texture of a polygon constituting the three-dimensional model by arraying and pasting the plurality of the unit textures, wherein
the computer program causes the computer to realize following functions as functions as the texture generating function:
a function of associating each position of the array in the polygon with a pixel of the matrix;
a function of selecting any of the plurality of types of the unit textures on the basis of the control value of the matrix corresponding to each of the positions; and
a function of arraying and pasting the selected unit texture at each of the positions.
